# EUROPÄISCHE PATENTSCHRIFT

(11) **EP 3 041 767 B1**
(45) Veröffentlichungstag und Bekanntmachung des Hinweises auf die Patenterteilung: **31.01.2018**
(21) Anmeldenummer: 14737243.7
(22) Anmeldetag: 09.07.2014
(51) Int. Cl.: B65G 15/42, B65G 15/38

(54) **FÖRDERANLAGE MIT VERBESSERTER TEMPERATURBESTÄNDIGKEIT**
CONVEYOR SYSTEM HAVING IMPROVED TEMPERATURE RESISTANCE
INSTALLATION DE TRANSPORT PRÉSENTANT UNE RÉSISTANCE À LA TEMPÉRATURE AMÉLIORÉE

(30) Priorität: 06.09.2013 DE 102013109769
(43) Veröffentlichungstag der Anmeldung: 13.07.2016
(73) Patentinhaber: ContiTech Transportbandsysteme GmbH, 30165 Hannover (DE)
(72) Erfinder: LORENZ, Bernd, 48691 Vreden (DE)
(74) Vertreter: Preusser, Andrea
(86) Internationale Anmeldenummer: PCT/EP2014/064664
(87) Internationale Veröffentlichungsnummer: WO 2015/032527

(56) Entgegenhaltungen:
- DE-A1- 2 548 987
- DE-A1- 3 219 170
- DE-A1-102009 025 911
- JP-A- S63 218 414
- JP-A- 2005 154 146
- JP-A- 2007 062 160
- JP-A- 2008 100 795
- JP-A- 2008 156 008

## Beschreibung

Die Erfindung betrifft eine Förderanlage mit einem Fördergurt, umfassend wenigstens eine Seitenwand aufgebaut aus jeweils mindestens einem polymeren Werkstoff mit elastischen Eigenschaften und / oder wenigstens einen Stollen aufgebaut aus jeweils mindestens einem polymeren Werkstoff mit elastischen Eigenschaften, sowie ferner mit Trommeln, Tragrollen und mit Traggerüsten, wobei die Förderanlage ein materialförderndes Obertrum mit einer Aufgabestelle für das Fördermaterial und ein zumeist materialfreies Untertrum ausbildet. Es gibt allerdings auch Förderanlagen, die zusätzlich im Untertrum beladen werden.

Förderanlagen mit endlos geschlossenen Fördergurten sind hinreichend bekannt. Fördergurte, oft auch als Förderbänder bezeichnet, verfügen zum Transport von schuttfähigen Gütern entweder über eine muldenförmige Ausführung, wie bspw. aus DE 10 2008 037 457 A1 oder DE 7019776 bekannt, oder über eine rechts- und linksseitige Seitenwand (Randprofilleiste), die im Wesentlichen senkrecht auf der Tragseite des Fördergurtes befestigt sind, wie bspw. aus DE 10 2008 013 571 A1 bekannt, und / oder über so genannte Stollen (Stege), wie bspw. aus DE19528205C2 oder DE 3835619C2 bekannt.

Die Seitenwände eines Fördergurtes sind oft als Wellkante bzw. Wellenkante ausgebildet, siehe beispielsweise in DE 10 2008 055 462 A1 beschrieben. Dadurch ist gewährleistet, dass trotz der oft relativ hohen Seitenwände der Fördergurt an den beiden Endpunkten der Transportstrecke schadlos um die dort befindliche Umlenktrommel geführt werden kann. Die Seitenwände sind in diesem Fall nicht langgestreckt und plan, sondern in gewellter (welliger bzw. schlangenlinienförmiger) Form ausgebildet und an dem Fördergurt an seinen Längsseiten befestigt. Hierdurch ist genügend Seitenwandmaterial vorhanden, um ein Reißen bedingt durch die Seitenwandstreckung bei der Umlenkung zu vermeiden. Sie bestehen zumeist aus einer elastischen Vollgummischicht mit und ohne Gewebeeinlagen. Fördergurte mit Wellkanten werden bevorzugt zum Transport von Schüttgütern verwendet. Insbesondere bei Steigförderern verhindern Stollen, vorzugsweise Querstollen, das Rutschen des Fördergutes. Bei geraden Fördergurten werden die Stollen auch als Trennung von Stückgütern verwendet. Die Stollen können hierbei mit oder ohne zusätzliche Gewebeeinlage ausgestattet sein.

Durch die Wellkanten wird der nutzbare Materialquerschnitt (d.h. die Füllquerschnittsfläche und damit das Fördervolumen) des Fördergurtes vergrößert. Wellkanten und Stollen, jeweils mit und ohne Fuß, werden zumeist auf den Fördergurt geklebt, geschweißt oder vulkanisiert. Die Stollen werden bevorzugt quer zur Förderrichtung aufgebracht.

Insbesondere da Fördergurte mit Wellkanten und / oder Stollen besonders gut geeignet sind, um Stück- und Schuttgut steil (bis zu 90°) befördern zu können, müssen die Wellkanten und / oder die Stollen über eine extrem gute und dauerhafte Verbindung zum Fördergurt verfügen. Die bereits oben erwähnte Verklebung wird meist mit einem Klebstoff bei relativ niedrigen Temperaturen durchgeführt, eine so genannte Kaltverklebung, und versagt bei Temperaturen oberhalb von 150°C. Dies ist insbesondere für zu fördernde Heißgüter negativ. Bei Fördergurten mit Stollen und / oder Wellkanten, die als polymere Werkstoffe Styrolbutadienkautschuk (SBR), Naturkautschuk (NR), Nitrilkautschuk (NBR), (teil-)hydrierten Nitrilkautschuk (HNBR), Chloroprenkautschuk (CR) oder Butylkautschuk (IIR) enthalten, werden die Stollen und / oder Wellkanten zumeist mittels einer Haftmischung auf den Fördergurt vulkanisiert. Auch hier zeigen sich bei hohen Temperaturen Ausfallerscheinungen, d.h. zum Einen sind die oben genannten polymeren Werkstoffe oft selbst nicht hochtemperaturbeständig, zum Anderen ist die über eine Haftmischung hergestellte Verbindung zwischen Fördergurt und Wellkanten oder Stollen nicht hochtemperaturbeständig. Als hochtemperaturbeständig werden im Rahmen der vorliegenden Schrift alle Werkstoffe bezeichnet, die bei Temperaturen oberhalb von 150°C beständig sind. Insbesondere zur Förderung von Heißfördergütern ist es bspw. aus JP 2000355415A, JP 63-218414A oder CA 1208155 bekannt, als polymere Werkstoffe für den Fördergurt Ethylen-Propylen-Elastomere (EPR-Kautschuke), wie EPM und EPDM, einzusetzen. Derartige Fördergurte mit EPR-Kautschuken konnten bislang nicht mit Wellkanten und / oder Stollen ausgestattet werden, da eine dauerhafte und temperaturbeständige Anbindung der mechanisch stark beanspruchten Wellkanten und / oder Stollen an den Fördergurt nicht möglich war. JP2007062160 beschreibt eine gattungsgemäße Förderanlage. Die Aufgabe der Erfindung darin, eine Förderanlage bereitzustellen, die sich durch eine dauerhafte und bei Temperaturen größer oder gleich 150°C beständige Verbindung zwischen dem Fördergurt und den aufgebrachten Seitenwänden und / oder Stollen auszeichnet. Die Seitenwände sind insbesondere als Wellkanten ausgebildet.

Gelöst wird diese Aufgabe durch die Förderanlage nach Anspruch 1 und durch das Verfahren nach Anspruch 5, wobei der polymere Werkstoff des Fördergurtes und der polymere Werkstoff der Seitenwand und / oder des Stollens jeweils wenigstens einen EPR-Kautschuk enthält und dass die Seitenwand und / oder der Stollen über eine Haftschicht mit dem Fördergurt verbunden ist, wobei die Haftschicht wenigstens einen EPR-Kautschuk enthält.

Es wurde festgestellt, dass sich für Förderanlagen, deren Fördergurt und deren Stollen und / oder Seitenwände auf EPR-Kautschuk basieren, überraschenderweise eine dauerhafte und hochtemperaturbeständige Verbindung herstellen lässt, wenn die genannten Bauteile der Förderanlage über eine Haftschicht verbunden sind, die wenigstens ebenso einen EPR-Kautschuk enthält.

Die Erfindung ist grundsätzlich für alle Förderanlagen und Fördergurte geeignet. Insbesondere bei Fördergurten mit Wellkanten oder mit vergleichsweise vielen oder großvolumigen Stollen ist die Erfindung besonders gut geeignet.

Erfindungswesentlich ist, dass der Fördergurt und die Seitenwand und / oder die Stollen wenigstens einen EPR-Kautschuk enthalten. Hierbei kann es sich um EPM und / oder um EPDM handeln, d.h. die beiden genannten können alleine oder in Kombination eingesetzt werden. Die Gesamtmenge an EPR-Kautschuk in der Kautschukmischung für den Fördergurt, die Seitenwand und / oder die Stollen beträgt hierbei bevorzugt 50 bis 100 Gew. -%, besonders bevorzugt 80 bis 100 Gew. -%, ganz besonders bevorzugt enthalten die Kautschukmischungen für den Fördergurt, die Seitenwand und / oder die Stollen als einzige Kautschukkomponente wenigstens einen EPR-Kautschuk, d.h. die Menge an EPR-Kautschuken beträgt 100 Gew. -%.

Die jeweiligen Kautschukmischungen für die oben genannten Bauteile des Fördergurtes können als Kautschukkomponente noch 0 bis 50 Gew. -% wenigstens eines weiteren Kautschuks enthalten. Dieser ist hierbei ausgewählt aus der Gruppe, bestehend aus Naturkautschuk (NR) und / oder Butadien-Kautschuk (BR) und / oder ChloroprenKautschuk (CR) und / oder Styrol-Butadien-Kautschuk (SBR) und / oder Nitrilkautschuk (NBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Polyurethan (PU) und / oder Epichlorhydrinkautschuk (ECO) und / oder chlorsulfonierter Polyethylenkautschuk (CSM) und / oder Silikonkautschuk (MVQ) und / oder Fluorkautschuk (FPM). Die genannten Kautschuke können hierbei alleine oder im Verschnitt eingesetzt werden.

Von besonderer Bedeutung ist bislang CR, das sich durch eine hohe Flamm-, Witterungs- und Alterungsbeständigkeit auszeichnet, insbesondere für Fördergurte mit Einsatz im Untertagebergbau. Im Übertagebergbau haben ferner NR sowie die oben erwähnten Verschnitte eine größere Bedeutung erlangt.

Es allerdings auch möglich, dass der Fördergurt, die Seitenwand und / oder der Stollen wenigstens einen thermoplastischen Kautschuk, d.h. ein thermoplastisches Polymer, (TP, TPE, TPU, etc.) enthält. Dieser kann mit den oben genannten im Verschnitt eingesetzt werden.

Des Weiteren können die jeweiligen Kautschukmischungen wenigstens einen Füllstoff in den üblichen Mengen enthalten. Hierbei können alle der fachkundigen Person bekannten Füllstoffe, wie bspw. Kieselsäure, Ruß, Glimmer, Kohlenstoffnanoröhren, Silikate, Aluminiumhydroxid, Talk, Kreide, etc. verwendet werden.

Ebenso können alle der fachkundigen Person bekannten weiteren Zusatzstoffe, wie Pigmente, Weichmacher, Ozon- und Alterungsschutzmittel eingesetzt werden.

Dies bedeutet, dass der Fördergurte, die Seitenwand und / oder der Stollen bezüglich der qualitativen und / oder der quantitativen Zusammensetzung ihrer jeweiligen Kautschukmischung gleich oder verschieden voneinander sein können.

Die Seitenwand und / oder der Stollen einen schichtförmigen Aufbau besitzt, wobei wenigstens eine Schicht, bevorzugt die nach außen weisende Schicht wenigstens einen EPR-Kautschuk enthält. In diesem Fall können noch weitere Schichten aus nicht-EPRhaltigen Kautschukmischungen aufgebaut sein oder als textile Lage, z. Bsp. aus einem Gewebe, ausgebildet sein.

Der Stollen ist erfindungsgemäß geometrisch als Standard T-Stollen, Block T-Stollen, geneigter C-Stollen, gekröpfter TC-Stollen, oder als Keilführungsleiste ausgebildet. Bei Vorhandensein einer textilen Lage, insbesondere in Form eines Gewebes, ist das Material bevorzugt ausgewählt aus der Gruppe, bestehend aus Baumwolle und / oder Polyamid und / oder Polyester und / oder Aramid und / oder Glas und / oder Basalt und / oder Stahl sein. Die genannten Werkstoffe können alleine oder in Form von Hybridgeweben, welche aus wenigstens einem der genannten Werkstoffe aufgebaut sind, eingesetzt werden. Von besonderer Bedeutung ist hier ein Polyamid-Polyester-Gewebe.

Die Seitenwände und / oder die Stollen können zudem noch weitere folgende Bauteile enthalten: Leiterschleifen, Transponder, Barcodes, eine Polymermatrix mit eingemischten detektierbaren Teilchen oder andere detektierbare Elemente.

Die erfindungsgemäße Haftschicht kann hinsichtlich ihrer quantitativen und / oder qualitativen Zusammensetzung gleich oder verschieden der Zusammensetzung der Kautschukmischung für die Seitenwand und / oder den Stollen sein. Wichtig ist, dass sie wenigstens einen EPR-Kautschuk enthält und zwar in den Mengen, die bereits oben für die Seitenwand und / oder den Stollen definiert sind.

Die Haftschicht kann ebenso Füllstoffe, wie Ruß und / oder Kieselsäure, Weichmacher, wie bspw. Mineralöle, Vernetzungsmittel und Vernetzungshilfsmittel enthalten. Bevorzugt wird die Haftschicht peroxidisch vernetzt. Sie kann ebenso Haftvermittler, wie bspw. Resorcin-Formaldehyd-Latex oder Klebharze, enthalten.

Die Haftschicht kann als Folie mit einer Foliendicke bis 3mm oder als Gummi- bzw. Kautschukstreifen mit einer Schichtdicke von mehr als 3mm vorliegen. Es ist abe rauch möglich, dass die Haftschicht als Haftmischung aufgebracht wird. In diesem Fall enthält die Haftmischung zusätzlich noch wenigstens einen Haftvermittler, wie bspw. organische Lösemittel, bevorzugt Xylol, Benzin, Ethylacetat, Aceton. Eine derartige Haftmischt kann aufgrund ihrer Viskosität auf die Stellen des Fördergurtes, auf die die Seitenwand und / oder die Stollen aufgebracht werden, durch Rakeln oder Streichen aufgebracht werden. Liegt die Haftschicht als Folie vor, so handelt es sich bevorzugt um eine extrudierte Folie. Liegt die Haftschicht als Streifen vor, so ist dieser bevorzugt kalandriert.

Weitere Bauteile einer Förderanlage können sein:
- Umlenkrollen oder Umlenktrommeln
- Niederhalterollen bei Rohrfördergurtanlagen
- Korrekturrollen, insbesondere bei Rohrfördergurtanlagen
- Schurren an der Aufgabestelle für das Fördermaterial
- Überwachungseinrichtungen

Die Erfindung wird nun anhand eines Ausführungsbeispiels unter Bezugnahme auf schematische Zeichnungen erläutert. Die Erfindung ist nicht auf die gezeigten Zeichnungen beschränkt.

Es zeigen:
- Fig. 1: eine Förderanlage mit einem Fördergurt, einer Trommel und Tragrollen;
- Fig. 2: Wellenkante
- Fig. 3: a) bis d) verschiedene Stollenformen

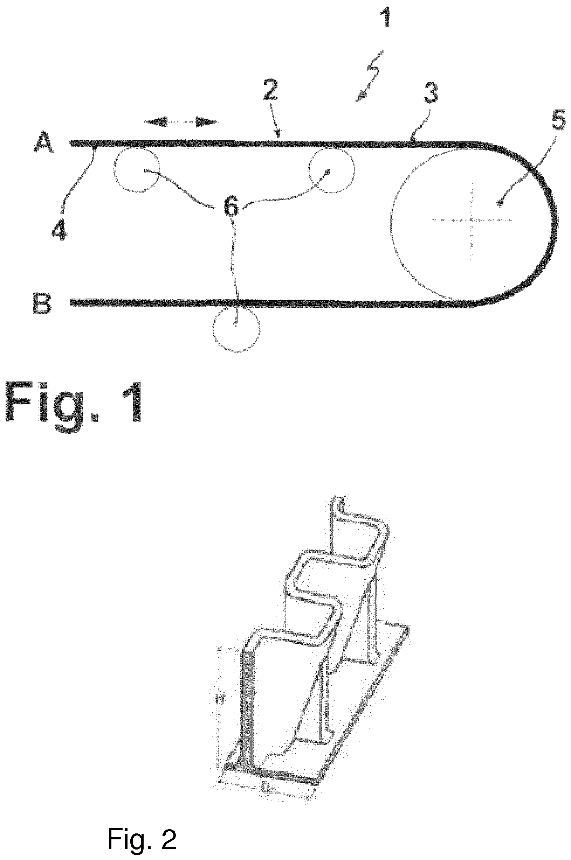

Fig. 1 zeigt eine Förderanlage 1 mit einem Fördergurt 2, umfassend eine tragseitige Deckplatte 3 für das Fördermaterial und eine laufseitige Deckplatte 4 aus jeweils einem polymeren Werkstoff mit elastischen Eigenschaften, beispielsweise aus einer vulkanisierten Kautschukmischung auf der Basis wenigstens eines EPR-Kautschuks, sowie mit einem eingebetteten Zugträger, beispielsweise in Form von Stahlseilen. Die laufseitige Deckplatte 4 hat Kontakt mit einer Trommel 5, die die Antriebstrommel oder Umkehrtrommel sein kann, und stützt sich zudem innerhalb des Obertrums A und Untertrums B an Tragrollen 6 in Form eines Tragrollensystems ab. Die Laufrichtung des Fördergurtes 2 ist durch die Pfeilrichtung dargestellt.

Fig. 2 zeigt einen Querschnitt durch eine Wellenkante, die wenigstens einen EPR-Kautschuk enthält enthält.

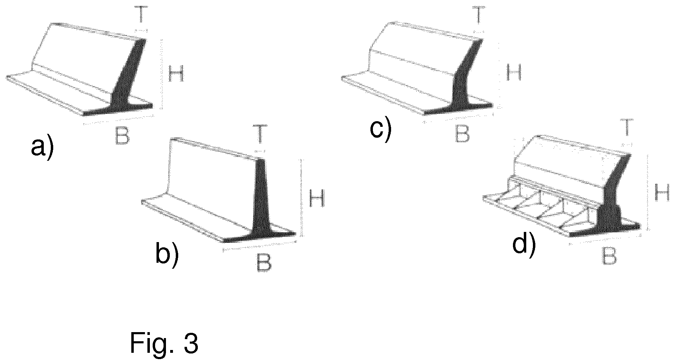

Fig. 3a) zeigt einen geneigten C Stollen mit zu definierender Breite B, Höhe H und Tiefe T

Fig. 3b) zeigt einen Standard T Stollen mit zu definierender Breite B, Höhe H und Tiefe T

Fig. 3a) und 3b) zeigen gekröpfte TC Stollen mit zu definierender Breite B, Höhe H und Tiefe T

### Bezugszeichenliste

### (Teil der Beschreibung)

- 1: Förderanlage
- 2: Fördergurt
- 3: tragseitige Deckplatte
- 4: laufseitige Deckplatte
- 5: Trommel (Antriebstrommel, Umkehrtrommel)
- 6: Tragrollen
- A: Obertrum B Untertrum
- H: Höhe der Wellenkante
- D: Durchmesser der Wellenkante

## Patentansprüche

1. Förderanlage (1) mit einem Fördergurt (2), umfassend wenigstens eine Seitenwand aufgebaut aus jeweils einem polymeren Werkstoff mit elastischen Eigenschaften und / oder wenigstens einen Stollen aufgebaut aus jeweils einem polymeren Werkstoff mit elastischen Eigenschaften, sowie ferner mit Trommeln (5), Tragrollen (6) und mit Traggerüsten, wobei die Förderanlage ein materialförderndes Obertrum (A) mit einer Aufgabestelle für das Fördermaterial und ein zumeist materialfreies Untertrum (B) ausbildet, wobei der polymere Werkstoff des Fördergurtes und der polymere Werkstoff der Seitenwand und / oder des Stollens jeweils wenigstens einen EPR-Kautschuk enthält und dass die Seitenwand und / oder der Stollen über eine Haftschicht mit dem Fördergurt verbunden ist, **dadurch gekennzeichnet, dass** die Haftschicht wenigstens einen EPR-Kautschuk enthält und wobei der Stollen geometrisch als Standard T-Stollen, Block T-Stollen, geneigter C-Stollen, gekröpfter TC-Stollen oder als Keilführungsleiste ausgebildet ist.

2. Förderanlage nach Anspruch 1, **dadurch gekennzeichnet, dass** der Anteil an EPR-Kautschuk in dem Fördergurt und in der Seitenwand und / oder in dem Stollen und in der Haftschicht größer oder gleich 50 Gew.-% beträgt.

3. Förderanlage nach Anspruch 1 oder 2, **dadurch gekennzeichnet, dass** der polymere Werkstoff des Fördergurtes bezüglich seiner Zusammensetzung qualitativ und quantitativ gleich des polymeren Werkstoffes der Seitenwand und / oder des Stollens ist.

4. Förderanlage nach einem der Ansprüche 1 bis 3, **dadurch gekennzeichnet, dass** die Seitenwand als Wellenkante ausgebildet ist.

5. Verfahren zur Herstellung einer Förderanlage, **gekennzeichnet durch** wenigstens folgende Verfahrensschritte:
- Herstellen eines unvulkanisierten oder teilvulkanisierten Fördergurtes enthaltend wenigstens einen EPR-Kautschuk als polymeren Werkstoff;
- Herstellen einer unvulkanisierten oder teilvulkanisierten Seitenwand und / oder eines unvulkanisierten oder teilvulkanisierten Stollens enthaltend wenigstens einen EPR-Kautschuks als polymeren Werkstoff, wobei der Stollen geometrisch als Standard T-Stollen, Block T-Stollen, geneigter C-Stollen, gekröpfter TC-Stollen oder als Keilführungsleiste ausgebildet ist;
- Aufbringen wenigstens einer Haftschicht enthaltend wenigstens einen EPR-Kautschuk auf wenigstens die Bereiche des unvulkanisierten oder teilvulkanisierten Fördergurtes, auf die die Seitenwand und / oder der Stollen in einem der nachfolgenden Verfahrensschritte aufgebracht werden sollen;
- Aufbringen der unvulkanisierten oder teilvulkanisierten Seitenwand und / oder des unvulkanisierten oder teilvulkanisierten Stollens auf den unvulkanisierten oder teilvulkanisierten Fördergurt;
- Gemeinsame Vulkanisation von Seitenwand und / oder Stollen und Fördergurt.

## Claims

1. Conveying installation (1) having a conveying belt (2) comprising at least one side wall constructed from in each case one polymeric material with elastic properties, and/or at least one cleat constructed from in each case one polymeric material with elastic properties, and also, furthermore, having drums (5), carrying rollers (6) and having carrying structures, the conveying installation forming a materials-conveying upper strand (A) with a charging location for the conveyed materials, and a usually materials-free lower strand (B), where the polymeric material of the conveying belt and the polymeric material of the side wall and/or of the cleat in each case comprise at least one EPR rubber, and in that the side wall and/or the cleat is joined to the conveying belt via an adhesion layer, **characterized in that** the adhesion layer comprises at least one EPR rubber, and the cleat takes the geometric form of a standard T cleat, block T cleat, inclined C cleat, offset TC cleat or of a wedge guide strip.

2. Conveying installation according to Claim 1, **characterized in that** the fraction of EPR rubber in the conveying belt and in the side wall and/or in the cleat and in the adhesion layer is greater than or equal to 50 wt%.

3. Conveying installation according to Claim 1 or 2, **characterized in that** the polymeric material of the conveying belt is qualitatively and quantitatively equal, in terms of its composition, to the polymeric material of the side wall and/or of the cleat.

4. Conveying installation according to any of Claims 1 to 3, **characterized in that** the side wall is in the form of an undulating edge.

5. Method for producing a conveying installation, **characterized by** at least the following method steps:
- producing an unvulcanized or partially vulcanized conveying belt comprising at least one EPR rubber as polymeric material;
- producing an unvulcanized or partially vulcanized side wall and/or an unvulcanized or partially vulcanized cleat comprising at least one EPR rubber as polymeric material, the cleat taking the geometric form of a standard T cleat, block T cleat, inclined C cleat, offset TC cleat or of a wedge guide strip;
- applying at least one adhesion layer comprising at least one EPR rubber to at least those regions of the unvulcanized or partially vulcanized conveying belt to which the side wall and/or the cleat are to be applied in one of the subsequent method steps;
- applying the unvulcanized or partially vulcanized side wall and/or the unvulcanized or partially vulcanized cleat to the unvulcanized or partially vulcanized conveying belt;
- jointly vulcanizing side wall and/or cleat and conveying belt.

## Revendications

1. Installation de transport (1) munie d'une bande de transport (2), comprenant au moins une paroi latérale constituée à chaque fois d'un matériau polymère présentant des propriétés élastiques et/ou au moins une barrette constituée à chaque fois d'un matériau polymère présentant des propriétés élastiques, et en outre munie de tambours (5), de rouleaux porteurs (6) et d'armatures, l'installation de transport formant un compartiment supérieur (A) transportant le matériau muni d'un emplacement de chargement pour le matériau à transporter, et un compartiment inférieur (B) la plupart du temps exempt de matériau, le matériau polymère de la bande de transport et le matériau polymère de la paroi latérale et/ou de la barrette contenant à chaque fois au moins un caoutchouc EPR et que la paroi latérale et/ou la barrette sont reliées par une couche adhésive à la bande de transport, **caractérisée en ce que** la couche adhésive contient au moins un caoutchouc EPR et la barrette est configurée géométriquement sous la forme d'une barrette en T standard, d'une barrette en T à blocs, d'une barrette en C inclinée, d'une barrette en TC coudée ou sous la forme d'une baguette de guidage en coin.

2. Installation de transport selon la revendication 1, **caractérisée en ce que** la proportion de caoutchouc EPR dans la bande de transport et dans la paroi latérale et/ou dans la barrette et dans la couche adhésive est supérieure ou égale à 50 % en poids.

3. Installation de transport selon la revendication 1 ou 2, **caractérisée en ce que** le matériau polymère de la bande de transport est au regard de sa composition qualitativement et quantitativement identique au matériau polymère de la bande latérale et/ou de la barrette.

4. Installation de transport selon l'une quelconque des revendications 1 à 3, **caractérisée en ce que** la paroi latérale est configurée sous la forme d'un bord ondulé.

5. Procédé de fabrication d'une installation de transport, **caractérisé par** au moins les étapes de procédé suivantes :
- la fabrication d'une bande de transport non vulcanisée ou partiellement vulcanisée contenant au moins un caoutchouc EPR en tant que matériau polymère ;
- la fabrication d'une paroi latérale non vulcanisée ou partiellement vulcanisée et/ou d'une barrette non vulcanisée ou partiellement vulcanisée contenant au moins un caoutchouc EPR en tant que matériau polymère, la barrette étant configurée géométriquement sous la forme d'une barrette en T standard, d'une barrette en T à blocs, d'une barrette en C inclinée, d'une barrette en TC coudée ou sous la forme d'une baguette de guidage en coin ;
- l'application d'au moins une couche adhésive contenant au moins un caoutchouc EPR sur au moins les zones de la bande de transport non vulcanisée ou partiellement vulcanisée sur lesquelles la paroi latérale et/ou la barrette doivent être appliquées lors de l'une quelconque des étapes de procédé suivantes ;
- l'application de la paroi latérale non vulcanisée ou partiellement vulcanisée et/ou de la barrette non vulcanisée ou partiellement vulcanisée sur la bande de transport non vulcanisée ou partiellement vulcanisée ;
- la vulcanisation commune de la paroi latérale et/ou de la barrette et de la bande de transport.
